# EUROPEAN PATENT SPECIFICATION

(11) **EP 0 757 631 B1**
(45) Date of publication and mention of the grant of the patent: **16.06.1999**
(21) Application number: 95918241.1
(22) Date of filing: 27.04.1995
(51) Int. Cl.: B60F 1/04

(54) **A VEHICLE FOR OPERATION ON BOTH ROAD AND RAILROAD TRACK**
FAHRZEUG GEEIGNET FÜR STRASSE UND SCHIENE
VEHICULE POUVANT SE DEPLACER A LA FOIS SUR ROUTE ET SUR RAILS

(30) Priority: 29.04.1994 SE 9401479
(43) Date of publication of application: 12.02.1997
(73) Proprietor: SWEDISH RAIL SYSTEM AB SRS, S-171 21 Solna (SE); AB SJÖLANDERS, 283 00 Osby (SE)
(72) Inventor: ASTRÖM, Jan, S-283 00 Osby (SE)
(74) Representative: Wennborg, Göte
(86) International application number: SE9500469
(87) International publication number: WO9529822

(56) References cited:
- DE-A- 2 625 887

## Description

### FIELD OF THE INVENTION

The present invention relates to a vehicle of the kind defined in the preamble of Claim 1.

Vehicles that can be driven on both roads and railroad tracks are known to the art, see for instance SE-B 7506711-6 (Publication No. 402 243) (Storm) and its American counterpart US-A 4,048,925.

In many cases, vehicles of this nature function well for the purpose for which they are intended and, among other things, when in their railroad-driving mode can be turned around on the tracks without affecting traffic on an adjacent track.

In practice, the principles described in the aforesaid patent publications have hitherto only been applied with comparatively heavy special duty vehicles, wherein the rear rail-wheel unit is comprised of a bogey having four wheels of comparatively large, robust and costly construction.

It is also desirable in many instances to equip lighter vehicles, such as vans, and light trucks or trucks of average weight for railroad operation. However, the use of a bogey as a rear rail-wheel unit would be a much too complicated and much too expensive solution.

Occasionally, it is desired to use the standard vehicle wheels as the driving wheels in the railroad track mode of the vehicle, in which case the mutual axial distance between the two front wheels and the two rear wheels, respectively, - possibly the two inner rear wheels when the rear wheels are comprised of "twin wheels" - will correspond to the track width or gauge, at least approximately.

The use of the standard driving wheels of a vehicle for railroad propulsion also enables the use of a separate power unit on the rear rail-wheel unit to be omitted, which can further simplify and lower the cost of the construction as a whole in relation to what has been usual hitherto when practicing the principles described in the aforesaid publications and where the possibility is given of using a single axle provided with rail-running wheels or a bogey as the rear rail-wheel unit, both alternatives with or without a separate power unit.

Tests carried out with the aforesaid principle of using a rear rail-wheel unit which is pivotal about a vertical axle and which has a single axle fitted with rail-wheels have shown that the unit begins to "quiver" when the vehicle is driven-up onto the track, so as to make the operation almost impossible to carry out.

The phenomenon occurs irrespective of whether the vehicle is reversed onto the track with the aid of front vehicle-drive wheels or is pulled onto the track with the aid of a power unit, such as an hydraulic motor, mounted on-the rear rail-wheel unit.

### OBJECTS OF THE INVENTION

Accordingly, one object of the invention is to eliminate the aforesaid serious drawbacks so as to also enable the track-mounting and turning principles described in the aforesaid publications to be applied in practice with smaller and lighter vehicles, without the use of a bogey as a rear rail-wheel unit.

Another object is to provide a vehicle of the aforesaid kind which can be converted from a road-driving mode to a railroad-driving mode either with the aid of standard road-driving wheels or with the aid of a drive arrangement, e.g. an hydraulic motor, mounted adjacent the rear rail-wheel unit, wherein said drive arrangement can be used in conjunction with drawing the vehicle up onto the track, in accordance with the inventive purpose, particularly in those cases when the vehicle concerned is equipped with a rear-wheel drive.

### SUMMARY OF THE INVENTION

These and other objects are fulfilled by a vehicle of the kind defined in the preamble of Claim 1 that includes the features set forth in the characterizing clause of Claim 1.

Those problems that are caused by the interaction of forces (both with regard to magnitude and direction) as the vehicle is driven up onto the track, these problems arising even when using a relatively light and simple rail-wheel unit, can be avoided by providing the articulated rail-wheel unit with a support element of the kind defined in the claim. This enables relatively light vehicles to be converted to a railroad-running mode, without requiring the use of a complicated and heavy bogey, so as to enable the vehicle to be driven onto the track without difficulty and in a reliable manner.

The articulated rail-wheel unit to which the support element is fitted is designed advantageously to be fixed in its position parallel with the track and the longitudinal axis of the vehicle. This ensures effective driving of the vehicle with the vehicle in its railroad-driving mode, wherewith the standard road-running drive wheels of the vehicle may also be used to drive the vehicle through engagement with the rails of the track. Alternatively, a separate drive unit, e.g. an hydraulic motor, may be mounted on the rail-wheel unit.

In order to ensure that the vehicle can be driven up onto the track safely while using the standard drive wheels of the vehicle, the rail-wheel unit provided with said support element will preferably be located at that end of the vehicle which is distal from the vehicle drive wheels.

For instance, in the case of a front wheel drive, the rail-wheel unit is located rearwardly of the vehicle and the vehicle is reversed up onto the track.

Alternatively, the scope of the invention enables the use of a vehicle equipped with a rear wheel drive, in which case the rail-wheel unit is instead located in front of the vehicle or in the region of its forward end.

In order to ensure that the vehicle can be driven effectively onto the track, the support element is conveniently provided with a rail-running wheel which is located for coaction with the rail that is distal from the vehicle-mounting side of the track.

In an alternative arrangement, in which a drive element engages the rail-wheel axle on the rail-wheel unit to which a support element is fitted, it is preferred that the rail-wheel of the support element will instead coact with the rail that is proximal to the vehicle-mounting side of the track.

Thus, in this latter case, the vehicle can be pulled up onto the track with the aid of the drive motor of the rail-wheel unit - which is particularly advantageous in those cases when the vehicle is a rear-wheel drive vehicle - wherein the interaction of forces between the component units is best taken into account when the arrangement is the described arrangement.

It therefore lies within the scope of the invention to enable the rail-wheel carrying support element to be moved or switched between two positions of use on the rail-wheel unit, i.e. so that the additional rail-wheel is able to coact with one or the other rails of the track. Further characteristic features of the invention will be apparent from the following description of preferred embodiments thereof. The description is given with reference to the accompanying drawings.
Fig. 1 is a side view of a vehicle which can be driven on a road and on railroad tracks and which is equipped in accordance with the present invention.
Fig. 2 is a view which illustrates the active elements of the vehicle from above, and also shows the railroad track in a first stage of mounting the vehicle on the track.
Fig. 3 is a view corresponding to the view of Fig. 2, illustrating an operational state in which the rear rail-wheel unit has been mounted on the track and driving or pulling of the vehicle onto the track continues.
Fig. 4 is a perspective view of the rear part of a vehicle according to Fig. 1, and illustrates the rail-wheel unit, associated support element and additional rail-wheel.
Fig. 5 is a view corresponding to the views of Figs. 2 and 3 and illustrates the vehicle converted to its railroad-driving mode.
Fig. 6 is a side view illustrating the operational state of the vehicle shown in Fig. 5, i.e. the railroad-driving mode of the vehicle, wherein the standard road wheels of the vehicle can be used to drive the vehicle along the rails.
Finally, Fig. 7 is a side view corresponding to the view of Fig. 6 and shows the vehicle raised from the track while being propelled by a power unit mounted on the rear rail-wheel unit, e.g. an hydraulic motor.

### DESCRIPTION OF PREFERRED EMBODIMENTS

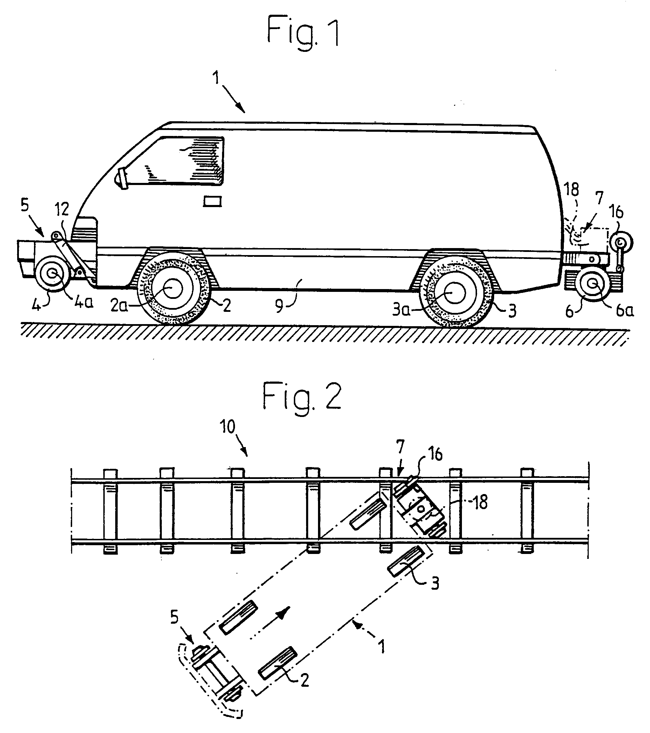

Figs. 1-4 illustrate a vehicle 1 which can be driven on a road surface and on a railroad track. The vehicle includes a wheel chassis 1a having a front steerable wheel axle 2a and a rear-wheel axle 3a, each of which carries a respective road-running wheel 2 and 3.

The wheel chassis 1a also carries a front rail-running wheel unit 5 and a rear rail-running unit 7, of which the rear unit 7 can be swung about a vertical axle 8.

The front unit 5 includes an axle 4a which carries rail-running wheels 4. The unit can be placed against a railroad track for the purpose of lifting the vehicle, with the aid of hydraulics 12. Corresponding hydraulics (not shown) are provided for coaction with the rear rail-wheel 7.

The shaft or axle of the rear rail-wheel unit is referenced 6a and the two rail-wheels are referenced 6. The rear rail-wheel unit 7, which is pivotal around the axle 8, is provided with an outwardly swingable support element 15 having a shaft 16a and a rail-wheel 16.

When the vehicle is to be driven onto or reversed onto the track in the manner shown in Figs. 2, 3 and 5, the support element 15 is swung out so that the rail-wheel 16 will come into engagement with the rail 10b that lies distal from the side on which the vehicle mounts the track 10.

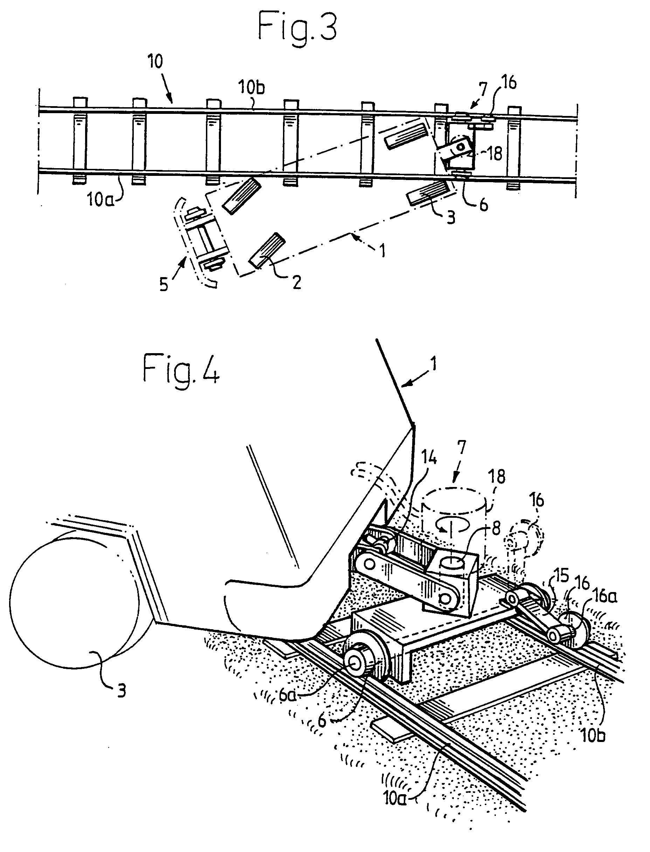

In the case of the embodiment shown in Figs. 1-5, the vehicle mounts the track with the aid of the vehicle front wheels 2, which are the vehicle drive wheels. The vehicle is thus backed onto the track after having brought the rear rail-wheel unit 7 into engagement with the track so that the rear part of the vehicle carrying the rear wheels 3 is raised, said rail-wheel unit 7 being moved by means of its hydraulic motor, the piston rod 14 of which is shown in Fig. 4.

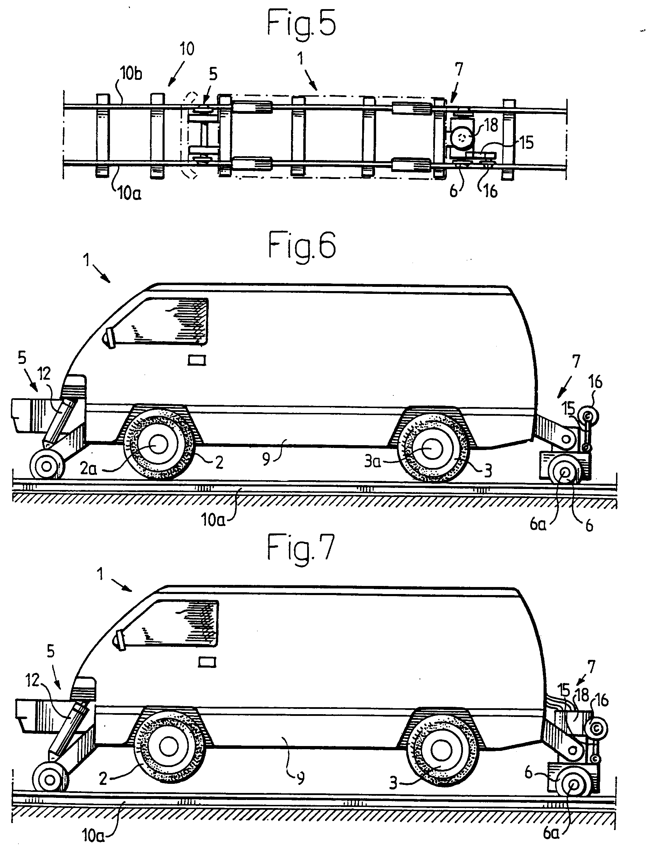

When the vehicle is in the position shown in Fig. 5, parallel with the track, the front wheel unit 5 of the vehicle is brought into engagement with the track with the aid of its hydraulic motor 12.

The vehicle can then be lowered slightly, so as to bring the wheels 2, 3 of the vehicle into abutment with the track. The wheel span is assumed to correspond to the gauge of the track. The vehicle is then moved along the track while powered by its standard road-driving power system.

In the case of the alternative embodiment shown in Fig. 7, the rear rail-wheel unit 7 is provided with a power unit 18 in the form of a hydraulic motor having an output shaft which functions to transmit power to the rail-wheel axle 6a carrying the rail-wheel 6.

The power unit 18 can also be used to draw the vehicle onto the track, which is particularly advantageous when the vehicle rear-wheels 3 are the driving wheels of the vehicle. In order to achieve the best interaction of forces between components, the support element 15 provided with the additional rail-wheel 16 will preferably be arranged so that the rail-wheel 16 will coact with the rail 10a that lies proximal to the track-mounting side of the vehicle.

The arrangement may optionally be one in which the rail-wheel unit 7 includes means for switching the support element 15 between the aforesaid two different positions. In this case, the rail-wheel 16 must be reversed in relation to the position shown in Fig. 4.

When the rail unit 7 is provided with a power unit 18 of the aforesaid kind, it may also be used to drive the vehicle along the track in the mode shown in Fig. 7, i.e. with the two road-running wheels out of engagement with the track.

Dismounting of the vehicle and turning of the vehicle on the track are effected in the reverse order to that described with reference to Figs. 2, 3 and 5. When the rail-wheel unit 7 includes a power unit 18, the unit may also be used in conjunction with dismounting the vehicle from and turning the vehicle on the track.

When the vehicle is driven along the track with the rail-wheel units 5 and 7 fixed and the vehicle parallel with said units and with the longitudinal axis of the track, the support element 5 is conveniently swung away from the position shown in Fig. 4 so that the additional rail-wheel 16 will no longer be in engagement with the rail 10b.

## Claims

1. A vehicle (1) for operation both on a road surface and on a railroad track, wherein the vehicle includes a wheel chassis (1a) having a front, steerable wheel axle (2a) and a rear wheel axle (3a), both of which carry respective road-running wheels (2; 3), and a front and a rear rail-wheel unit (5; 7) located respectively in the front part of the vehicle and behind the rear wheels (3) of the vehicle, wherein one of the units is pivotal about a vertical axle (8) and both units (5; 7) have an axle (4a; 6a) which carries rail-wheels (4; 6), and is vertically movable to bring the rail-wheels (4; 6) into engagement with the rails of the track (10), **characterized** in that the rail-wheel unit (7) which is pivotal about the vertical axle (8) is provided with a support element (15) which can be swung to a position in which said element is parallel with one of the rails (10a; 10b) of the track (10), said support element (15) having an axle (16a) which carries a rail-running wheel (16) for engagement with said rail when driving the vehicle up onto the track.

2. A vehicle according to Claim 1, **characterized** in that the pivotal rail-wheel unit (7) carrying said support element (15) can be fixed in its position parallel with the track (10) and the longitudinal axis of the vehicle.

3. A vehicle according to Claim 1 or Claim 2, **characterized** in that the rail-wheel unit (7) carrying said support element (15) is located at that end of the vehicle (1) which is furthest from the vehicle drive wheels (2).

4. A vehicle according to Claim 3, **characterized** in that the rail-wheel (16) of the support element (15) coacts with that rail (10b) which is distal from the vehicle-mounting side of the track (10).

5. A vehicle according to any one of Claims 1-3, including a power unit (18) which engages the rail-wheel axle (6a) on the rail-wheel unit (7) carrying said support element, **characterized** in that the rail-wheel (16) on the support element (15) coacts with that rail (10a) which is proximal to the vehicle-mounting side of the track.

6. A vehicle according to Claim 4, **characterized** in that the pivotal rail-wheel (7) includes alternative support element (15) attachment points, so that the support element can be switched between two positions to the one that lies proximal to the track-mounting side of the vehicle.

## Patentansprüche

1. Fahrzeug (1) zum Betrieb auf sowohl einer Straßendecke als auch auf einem Bahngleis, wobei das Fahrzeug ein Radchassis (1a) umfaßt, das eine vordere steuerbare Radachse (2a) und eine rückwärtige Radachse (3a) aufweist, von denen beide jeweils Straßenlaufräder (2; 3) tragen, und eine vordere und eine rückwärtige Schienenradeinheit (5; 7) umfaßt, die in dem vorderen Teil des Fahrzeugs bzw. hinter den rückwärtigen Rädern (3) des Fahrzeuges angeordnet ist, wobei eine der Einheiten um eine vertikale Achse (8) schwenkbar ist und beide Einheiten (5; 7) eine Achse (4a; 6a) aufweisen, die Schienenräder (4; 6) trägt und vertikal bewegbar ist, um die Schienenräder (4; 6) mit den Schienen des Gleises (10) in Eingriff zu bringen,
dadurch **gekennzeichnet**,
daß die Schienenradeinheit (7), die um die vertikale Achse (8) schwenkbar ist, mit einem Trägerelement (15) versehen ist, das in eine Stellung geschwungen werden kann, in der das Element parallel zu einer der Schienen (10a; 10b) des Gleises (10) angeordnet ist, wobei das Trägerelement (15) eine Achse (16a) aufweist, die ein Schienenlaufrad (16) für einen Eingriff mit der Schiene trägt, wenn das Fahrzeug auf das Gleis gefahren wird.

2. Fahrzeug nach Anspruch 1,
dadurch **gekennzeichnet**,
daß die schwenkbare Schienenradeinheit (7), die das Trägerelement (15) trägt, in ihrer Stellung parallel zu dem Gleis (10) und der Längsachse des Fahrzeuges feiert werden kann.

3. Fahrzeug nach Anspruch 1 oder Anspruch 2,
dadurch **gekennzeichnet**,
daß die Schienenradeinheit (7), die das Trägerelement (15) trägt, an demjenigen Ende des Fahrzeuges (1) angeordnet ist, das am weitesten von den Fahrzeugantriebsrädern (2) entfernt ist.

4. Fahrzeug nach Anspruch 3,
dadurch **gekennzeichnet,**
daß das Schienenrad (16) des Trägerelements (15) mit derjenigen Schiene (10b) zusammenwirkt, die von der Fahrzeugaufsetzseite des Gleises (10) entfernt ist.

5. Fahrzeug nach einem der Ansprüche 1 - 3,
mit einer Antriebseinheit (18), die mit der Schienenradachse (6a) an der Schienenradeinheit (7) in Eingriff steht, welche das Trägerelement trägt,
dadurch **gekennzeichnet**,
daß das Schienenrad (16) an dem Trägerelement (15) mit derjenigen Schiene (10a) zusammenwirkt, die der Fahrzeugaufsetzseite des Gleises am nächsten gelegen ist.

6. Fahrzeug nach Anspruch 4,
dadurch **gekennzeichnet**,
daß das schwenkbare Schienenrad (7) alternative Befestigungspunkte für das Trägerelement (15) umfaßt, so daß das Trägerelement zwischen zwei Stellungen zu derjenigen versetzt werden kann, die der Gleisaufsetzseite des Fahrzeuges am nächsten gelegen ist.

## Revendications

1. Véhicule (1) pour rouler aussi bien sur la surface d'une route que sur une voie de chemin de fer, où le véhicule comprend un châssis (1a) pour roues, ayant un axe de roues avant orientable (2a) et un axe (3a) de roues arrière, chacun des axes portant des roues respectives (2; 3) pour rouler sur une route, et des unités avant et arrière (5; 7) avec des roues pour rouler sur des rails se trouvant respectivement dans la partie avant du véhicule et à l'arrière des roues arrière (3) du véhicule, où une des unités peut pivoter par rapport à un axe vertical (8) et les deux unités (5; 7) ont un axe (4a; 6a) qui porte des roues (4; 6) pour rails et qui est mobile verticalement pour amener les roues (4; 6) pour rails à s'engager avec les rails de la voie (10), caractérisé en ce que l'unité (7) avec des roues pour rails qui peut pivoter par rapport à un axe vertical (8) porte un élément de support (15) qui peut être pivoté vers une position dans laquelle ledit élément est parallèle à l'un des rails (10a; 10b) de la voie (10), ledit élément de support (15) ayant un axe (16a) qui porte une roue (16) pour rail, pour s'engager avec ledit rail quand le véhicule est amené sur la voie.

2. Véhicule selon la revendication 1, caractérisé en ce que l'unité pivotante (7) avec des roues pour rails portant ledit élément de support (15) peut être immobilisée dans sa position parallèle à la voie (10) et à l'axe longitudinal du véhicule.

3. Véhicule selon la revendication 1 ou la revendication 2, caractérisé en ce que l'unité (7) avec des roues pour rails portant ledit élément de support (15) se trouve à l'extrémité du véhicule (1) qui est la plus éloignée des roues motrices (2) du véhicule.

4. Véhicule selon la revendication 3, caractérisé en ce que la roue (16) pour rail de l'élément de support (15) coopère avec le rail (10b) qui est distal par rapport au côté de la voie (10) par lequel le véhicule monte sur la voie.

5. Véhicule selon l'une quelconque des revendications 1 - 3, comprenant une unité motrice (18) qui s'engage avec l'axe (6a) des roues pour rails sur l'unité (7) avec des roues pour rails portant ledit élément de support, caractérisé en ce que la roue (16) pour rail sur l'élément de support (15) coopère avec le rail (10a) qui est proximal par rapport au côté de la voie (10) par lequel le véhicule monte sur la voie.

6. Véhicule selon la revendication 4, caractérisé en ce que l'unité pivotante (7) avec des roues pour rail comprend des points d'immobilisation supplémentaires pour l'élément de support (15), de sorte que l'élément de support peut être déplacé entre deux positions, vers une position proximale par rapport au côté de la voie par lequel le véhicule monte sur la voie.
